(19) **Europäisches Patentamt / European Patent Office / Office européen des brevets**

(11) **EP 4 528 763 A1**

(12) **EUROPEAN PATENT APPLICATION**
published in accordance with Art. 153(4) EPC

(43) Date of publication:
26.03.2025 Bulletin 2025/13

(21) Application number: 23807708.5

(22) Date of filing: 18.05.2023

(51) International Patent Classification (IPC):
*H01G 11/36* [(2013.01)] *H01G 11/06* [(2013.01)]

(52) Cooperative Patent Classification (CPC):
H01G 11/06; H01G 11/36

(86) International application number:
PCT/JP2023/018663

(87) International publication number:
WO 2023/224107 (23.11.2023 Gazette 2023/47)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 19.05.2022 JP 2022082604

(71) Applicant: Materials Innovation Tsukuba
Incorporated
Tsukuba-shi, Ibaraki 305-0047 (JP)

(72) Inventors:
- ZHANG, Kun
  Tsukuba-shi, Ibaraki 305-0047 (JP)
- YIN, Hang
  Tsukuba-shi, Ibaraki 305-0047 (JP)
- HATO, Yukinori
  Tsukuba-shi, Ibaraki 305-0047 (JP)

(74) Representative: Mewburn Ellis LLP
Aurora Building
Counterslip
Bristol BS1 6BX (GB)

(54) **ELECTRODE MATERIAL, ELECTRODE, AND CAPACITOR**

(57) The present invention provides an electrode material capable of realizing a lithium ion capacitor having high capacity and also excellent durability, and an electrode and a capacitor using the electrode material. An electrode is formed using an electrode material containing a composite 10 of graphene and carbon nanotubes, the composite having a ratio of carbon atoms to oxygen atoms (C/O) of 7 or more as measured by X-ray photoelectron spectroscopy and a carbon nanotube content of less than 20 mass% (excluding 0 mass%), and the electrode is used, for example, as a positive electrode to constitute a lithium ion capacitor.

[Figure 1]

EP 4 528 763 A1

## Description

Technical Field

The present invention relates to an electrode material using graphene, and an electrode and a capacitor formed using this electrode material.

Background Art

Graphene is a sheet-like material having a two-dimensional network structure in which $sp^2$ carbon atoms are bonded hexagonally, and has high electrical conductivity and high strength and is also excellent in heat resistance, thus, has attracted attention in various fields such as electronics such as electronic materials, and additionally, biomedical materials, aerospace materials, and the like. In particular, single-layer graphene has a large specific surface area and is expected to have a high capacity, so it is being studied as an electrode material for batteries and capacitors (see, for example, Patent Literatures 1 to 3).

Patent Literature 1 describes graphene oxide having improved dispersibility in a solvent and improved electrical conductivity by adjusting the ratio of carbon atoms to oxygen atoms (C/O) as measured by X-ray photoelectron spectroscopy to 2.5 to 4. Further, Patent Literature 2 proposes a graphene powder having a specific surface area of 80 to 250 $m^2/g$ as measured by BET measurement method and an elemental ratio of oxygen to carbon (O/C ratio) of 0.09 to 0.30 as measured by X-ray photoelectron spectroscopy.

On the other hand, Patent Literature 3 proposes a lithium ion capacitor in which a cathode is formed from a composite of graphene and carbon nanotubes, an anode is formed from a composite of Li-doped graphene and carbon nanotubes, and the mass ratio of the anode to the cathode is greater than 0 and less than 1.0. The composite of graphene and carbon nanotubes described in Patent Literature 3 has a structure in which single-layer graphene is laminated with single-layer carbon nanotubes as a spacer.

Citation List

Patent Literatures

Patent Literature 1: Japanese Patent Application Publication (JP-A) No. 2015-143162
Patent Literature 2: International Publication WO2016/056557
Patent Literature 3: Japanese Patent No. 6732302

Summary of Invention

Technical Problem

However, the graphene oxide described in the above-mentioned Patent Literature 1 has a problem that it has low electrical conductivity and affects electrochemical performance because it contains many oxygen-containing functional groups. In addition, the graphene powder described in Patent Literature 2 has a problem that it is easy to stack between graphene sheets. When actually constructing an electricity storage device, the electrode material is mixed with a conductive material and a binder (a binding agent) and processed into a film, and when the graphene powder of Patent Literature 2 is mixed with such a conductive material and binder, these are adsorbed on the surface of the graphene, causing stacking between the graphene sheets, which may affect the penetration and diffusion of electrolyte ions and degrade the energy characteristics of the electricity storage device.

On the other hand, the lithium ion capacitor described in Patent Literature 3 uses a composite of graphene and carbon nanotubes as an electrode material, and therefore can improve the specific capacitance and energy density, but, in order to expand the range of application of lithium ion capacitors, there is a demand for improved durability and further increased capacity.

Therefore, the present invention provides an electrode material capable of realizing a lithium ion capacitor having high capacity and excellent durability, and an electrode and a capacitor using this electrode material.

Solution to Problem

The electrode material according to the present invention is an electrode material comprising a composite of graphene and carbon nanotubes, wherein the composite has a ratio of carbon atoms to oxygen atoms (C/O) of 7 or more as measured by X-ray photoelectron spectroscopy, and a carbon nanotube content of less than 20 mass% (excluding 0 mass%).

As the composite, for example, a graphene laminate having carbon nanotubes present between layers can be used.

The composite may have a ratio of carbon atoms to oxygen atoms (C/O) of 12 or more as measured by X-ray photoelectron spectroscopy.

The composite may be in the form of an approximately spherical aggregate.

In this case, a polymer layer may be formed on the surface of the aggregate.

The electrode according to the present invention is formed using the above-mentioned electrode material, and contains, in addition to the above-mentioned electrode material, for example, a conductive material and a binder.

The capacitor according to the present invention includes the above-described electrode.

When the capacitor of the present invention is a lithium ion capacitor, the above electrode can be used as a positive electrode.

Another electrode material according to the present invention contains graphene powder having a ratio of carbon atoms to oxygen atoms (C/O) of 12 or more as measured by X-ray photoelectron spectroscopy.

The ratio of carbon atoms to oxygen atoms (C/O) specified in the present invention is a value calculated from the amounts of carbon atoms (C) and oxygen atoms (O) measured by X-ray photoelectron spectroscopy (XPS), and the same applies in the following descriptions.

Advantageous Effects of Invention

According to the present invention, a lithium ion capacitor having high capacity and excellent durability can be realized.

Brief Description of Drawings

[Figure 1]

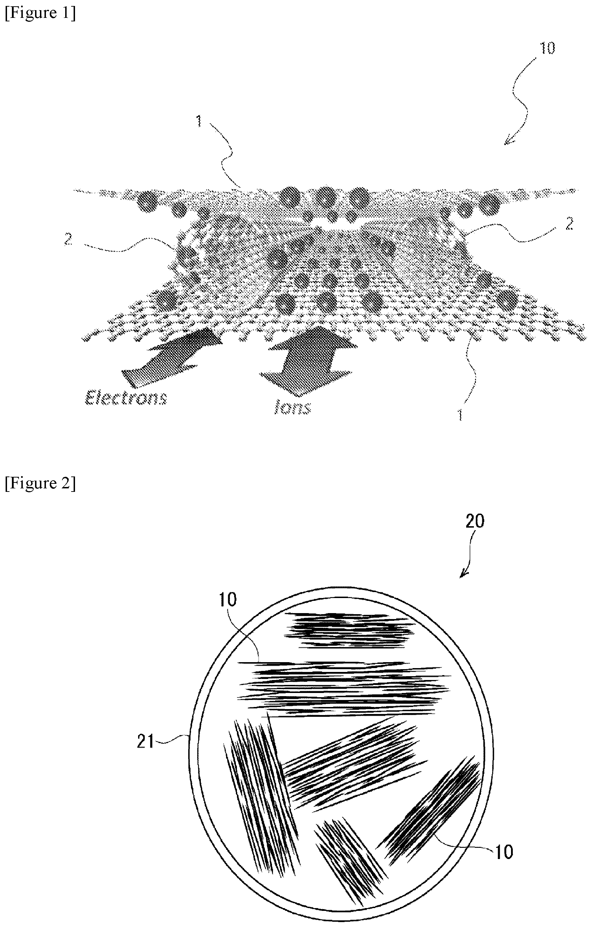

FIG. 1 is a view schematically showing a structural example of a composite of graphene and carbon nanotubes.
[Figure 2]
FIG. 2 is a view schematically showing an embodiment of an aggregate of a composite of graphene and carbon nanotubes.
[Figure 3]

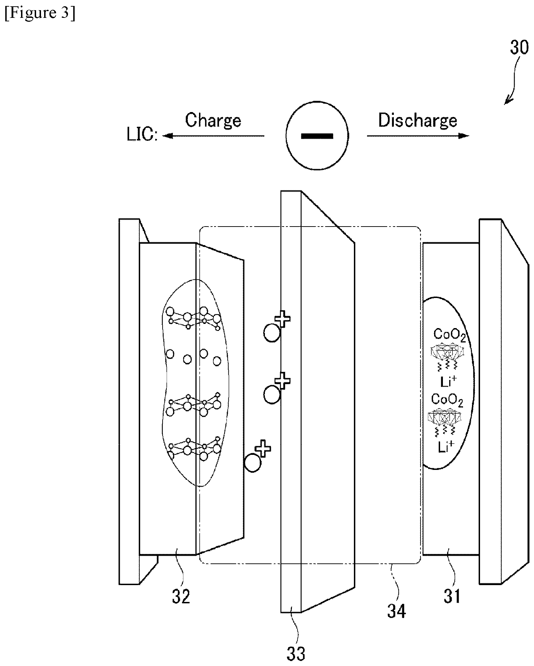

FIG. 3 is a schematic view showing a structural example of a lithium ion capacitor.
[Figure 4]

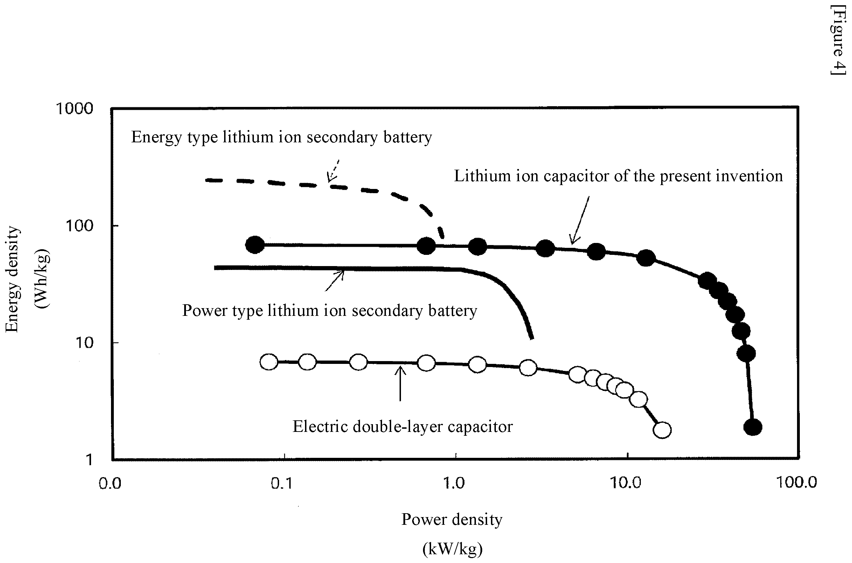

FIG. 4 is a view showing the performance of the capacitor of the present invention, with the horizontal axis representing power density and the vertical axis representing energy density.

Description of Embodiments

Hereinafter, embodiments for carrying out the present invention will be described in detail with reference to the accompanying drawings. Note that the present invention is not limited to the embodiments described below.

(First Embodiment)

First, an electrode material according to a first embodiment of the present invention will be described. The electrode material according to this embodiment is composed of a composite of graphene and carbon nanotubes (CNTs) (hereinafter also referred to as a graphene/CNT composite), or contains a graphene/CNT composite as a main raw material. The graphene/CNT composite used in the electrode material according to this embodiment has a ratio of carbon atoms to oxygen atoms (C/O) of 7 or more as measured by X-ray photoelectron spectroscopy (XPS), and a carbon nanotube content of less than 20 mass% (excluding 0 mass%).

[Graphene/CNT composite structure]

FIG. 1 is a view schematically showing a structural example of a graphene/CNT composite. The graphene/CNT composite used in the electrode material of the present embodiment may be a composite of graphene and CNT, and the structure is not particularly limited, and for example, one having a structure in which single-layer graphene 1 and carbon nanotubes 2 are alternately laminated like a graphene/CNT composite 10 shown in FIG. 1 can be used.

In the graphene/CNT composite 10 shown in FIG. 1, the graphenes 1 are regularly arranged at equal intervals and parallel to each other, but the present invention is not limited to this, and the graphenes 1 may be randomly arranged. Similarly, the CNTs 2 are arranged parallel to each other in the in-plane direction, but the present invention is not limited to this, and the CNTs 2 may be randomly arranged between the layers of the graphene 1.

Furthermore, the type of CNT2 is not particularly limited, and may be any of single-walled carbon nanotubes (SWCNT), double-walled carbon nanotubes (DWCNT), and multi-walled carbon nanotubes (MWCNT). The size of CNT2 is not particularly limited, but from the viewpoint of promoting uniform dispersion of CNT in graphene and more efficiently making the composite with graphene 1, the length is preferably 1 to 20 $\mu$m, and the average outer diameter is preferably 0.4 to 5.0 nm, and more preferably 1.0 to 3.0 nm.

Graphene 1 has a characteristic of being easily aggregated due to $\pi$-$\pi$ stacking, but in the graphene/CNT composite 10, CNTs 2 present between the layers of the single-layer graphene 1 function as spacers, and therefore, stacking is prevented and a high specific surface area can be ensured. Furthermore, when processed into an electrode, an electrolyte flows into the gaps between the layers of the single-layer graphene 1, and electrolyte ions are easily adsorbed onto the graphene surface. Furthermore, since carbon nanotubes 2 with high electrical conductivity are present between the layers of the graphene 1, the graphene/CNT composite 10 also has high electrical conductivity in the thickness direction.

The graphene/CNT composite used in the electrode material of this embodiment may constitute an approximately spherical aggregate, and in that case, a polymer layer may be formed on the surface of the aggregate. FIG. 2 is a view schematically showing an embodiment of an aggregate of the graphene/CNT composite 10. The aggregate 20 shown in FIG. 2 is an aggregate of graphene/CNT basic skeletons, and the shape of the graphene/CNT composite 10 is maintained. Therefore, when used for electricity storage devices such as an electric double-layer capacitor, a lithium ion capacitor, or a lithium ion battery, their energy density and power density can be improved while maintaining the excellent electrical conductivity of the graphene/CNT composite 10 and the adsorption performance of the electrolyte ions.

Here, the approximately spherical aggregate 20 of the graphene/CNT composites 10 can be formed, for example, by dispersing the graphene/CNT composites 10 in which the CNT is located between the graphene layers in a lower alcohol having 1 to 5 carbon atoms or a mixed liquid of such a lower alcohol and water.

[Graphene/CNT composite, C/O is 7 or more]

The graphene/CNT composite used in the electrode material of this embodiment has a ratio of carbon atoms to oxygen atoms (C/O) of 7 or more as measured by X-ray photoelectron spectroscopy (XPS). If the C/O ratio of the graphene/CNT composite is less than 7, sufficient durability cannot be obtained when it is made into an electrode, and the capacity retention rate decreases when it is used repeatedly. The C/O ratio of the graphene/CNT composite is preferably 12 or more, and this makes it possible to realize a capacitor electrode that can retain a high capacity for a long period of time over a wide temperature range.

Here, the C/O value of the graphene/CNT composite can be adjusted, for example, by changing the C/O ratio of the graphene constituting the composite. The graphene constituting the graphene/CNT composite is prepared by reducing graphene oxide, and in this case, the C/O ratio of the obtained graphene can be adjusted by changing the graphene oxide reduction time, reduction temperature, or reducing agent concentration.

[Graphene/CNT composite, CNT content: less than 20 mass%]

The graphene/CNT composite used in the electrode material of this embodiment has a CNT content of less than 20 mass%. When the CNT content is 20 mass% or more, the graphene content is relatively reduced, and therefore, when such a graphene/CNT composite is used as an electrode material, the energy characteristics of the electricity storage device are degraded. Note that, since CNT is an essential component in the electrode material of this embodiment, the CNT content does not include 0 mass%.

As described above in detail, the electrode material of the present embodiment contains a graphene/CNT composite having a ratio of a carbon atom to oxygen atom (C/O) of 7 or more and a CNT content of less than 20 mass%, and therefore can realize a capacitor electrode that is excellent in durability and can maintain a high cell capacity even at high temperatures.

(Second Embodiment)

Next, an electrode according to a second embodiment of the present invention will be described. The electrode according to the present embodiment is formed from the electrode material according to the first embodiment described above, and contains at least a graphene/CNT composite, and may further contain a conductive material, a binder, and the like.

The conductive material used in the electrode of the present embodiment is not particularly limited and may be any material that is used as a conductive material in a normal electrode, and from the viewpoint of affinity with graphene, carbon materials such as carbon black, acetylene black, channel black, furnace black, and ketjen black are preferred.

The binder can also be appropriately selected from organic solvent-based binders and aqueous binders used in normal electrodes. Specifically, examples of organic solvent-based binders include polytetrafluoroethylene (PTFE) resin, its modified polytetrafluoroethylene resin, polyvinylidene fluoride (PVDF), etc., and examples of aqueous binders include sodium carboxymethylcellulose (CMC), styrene butadiene rubber (SBR), etc. Among these, it is particularly preferable to use a combination of the aqueous binders CMC and SBR.

The electrode of this embodiment can be formed, for example, by adding a solvent such as water to the graphene/CNT composite, the conductive material, and the binder, thoroughly mixing the mixture to form a slurry, coating both sides of a metal foil collector made of an aluminum etched foil or the like with the slurry using a roll coater or the like to form an electrode layer, and drying the resulting layer. The electrode of this embodiment can be used for various applications, such as various capacitors such as lithium ion capacitors, various secondary batteries such as lithium ion secondary batteries, and other electricity storage devices, as well as fuel cells and electrodes for various reactions.

The electrode of the present embodiment is formed from an electrode material containing a graphene/CNT composite in which the ratio of carbon atoms to oxygen atoms (C/O) is 7 or more and the CNT content is less than 20 mass%, and therefore it is possible to realize a capacitor that is excellent in durability and can maintain a high cell capacity even at high temperatures.

(Third Embodiment)

Next, a capacitor according to a third embodiment of the present invention will be described. The capacitor according to the present embodiment includes the electrodes according to the second embodiment described above.

FIG. 3 is a schematic view showing the structure of a lithium ion capacitor (LIC). For example, when the capacitor of this embodiment is a lithium ion capacitor 30 shown in FIG. 3, a positive electrode (cathode) 31 and a negative electrode (anode) 32 are arranged facing each other with a spacer 33 therebetween, and a Li ion electrolyte 34 is filled between these electrodes. In this lithium ion capacitor, the electrode of the second embodiment described above is used at least as the positive electrode (cathode) 31.

The electrode material used in the lithium ion capacitor of this embodiment has, for example, an energy density of 177 Wh/kg or more and an power density of 108 W/kg or more, so that a capacitor with higher power and capacity can be obtained compared to conventional products.

In the capacitor of the present embodiment, at least the positive electrode is formed of a graphene/CNT composite or an electrode material containing this composite, in which the ratio of carbon atoms to oxygen atoms (C/O) is 7 or more and the CNT content is less than 20 mass%, and therefore the capacitor has a higher capacity and is more durable than conventional products. Specifically, the electrode material used in conventional lithium ion capacitors has a capacity per unit mass of 70 to 80 F/g and an operating voltage of about 2.2 to 3.8 V, but the electrode material used in the lithium ion capacitor of the present embodiment has a capacity per unit mass of about 160 F/g and an operating voltage of 2.2 to 4.3 V, and thus, the energy density is about three times that of conventional lithium ion capacitors.

FIG. 4 is a view showing the performance of various capacitors, with the horizontal axis representing the power density and the vertical axis representing the energy density. As shown in FIG. 4, the lithium ion capacitor of the present invention, which uses a graphene/CNT composite in which the ratio of carbon atoms to oxygen atoms (C/O) is 7 or more and the CNT content is less than 20 mass% as the electrode material, can significantly improve the power density compared to conventional electric double-layer capacitors, and thus, it is possible to design an electricity storage device that surpasses lithium ion secondary batteries.

(Fourth Embodiment)

Next, an electrode material according to a fourth embodiment of this embodiment will be described. Although the electrode material according to the first embodiment described above uses a graphene/CNT composite, the present invention is not limited thereto, and graphene can be used alone without being combined with CNT. Specifically, the electrode material according to this embodiment is graphene powder having a ratio of carbon atoms to oxygen atoms (C/O) of 12 or more as measured by XPS.

The electrode material of the present embodiment contains graphene powder having a ratio of carbon atoms to oxygen atoms (C/O) of 12 or more, and therefore can realize a capacitor electrode that is excellent in durability and can maintain a high cell capacity even at high temperatures.

EXAMPLES

The effects of the present invention will be specifically described below with reference to examples and comparative examples.

<First Example>

As a first example of the present invention, electrodes were fabricated using graphene/CNT composites having different ratios of carbon atoms to oxygen atoms (C/O), and the characteristics of lithium ion capacitors using these electrodes as positive electrodes were evaluated.

[Cell performance]

The cell performance was evaluated according to the following methods and criteria.

(1) Manufacturing of the positive electrode

Eighty seven parts by mass of graphene/CNT composite powder was mixed with 5 parts by mass of acetylene black powder, 4 parts by mass of acrylic binder, 4 parts by mass of carboxymethyl cellulose, and 210 parts by mass of water, and thoroughly mixed to obtain a positive electrode slurry. In addition, an aluminum through-foil having a thickness of 31 $\mu$m was used as the positive electrode current collector. Then, the above-mentioned positive electrode slurry was applied to both sides of the positive electrode current collector by a roll coater to form a positive electrode layer, and then vacuum dried. The total thickness of the obtained positive electrode (the sum of the thickness of the positive electrode layer and the thickness of the positive electrode current collector on both sides) was 195 $\mu$m.

(2) Manufacturing of the negative electrode

Eighty eight parts by mass of graphite having a particle diameter (D50) of 5 $\pm$ 0.5 $\mu$m was mixed with 5 parts by mass of acetylene black powder, 3 parts by mass of SBR (styrene butadiene rubber)-based binder, 4 parts by mass of carboxymethyl cellulose, and 210 parts by mass of water, and thoroughly mixed to obtain a negative electrode slurry. A copper foil having a thickness of 21 $\mu$m was used as the negative electrode current collector. The above-mentioned negative electrode slurry was then applied to both sides of the negative electrode current collector by a roll coater to form a negative electrode layer, and then vacuum dried. The total thickness of the obtained negative electrode (the sum of the thickness of the negative electrode layer and the thickness of the negative electrode current collector on both sides) was 66 $\mu$m.

(3) Measurement of electrostatic capacity per unit mass of the positive electrode

The positive electrode fabricated by the above-mentioned method was cut into two pieces with a size of 3.0 cm $\times$ 3.0 cm to be used as electrodes for evaluation. After ultrasonic welding of terminals to each of the two electrodes for evaluation, they were placed facing each other with a cellulose separator having a thickness of 25 $\mu$m sandwiched therebetween, and were housed in an exterior body made of a laminate film in which polypropylene, aluminum, and nylon were laminated. Then, an electrolyte (1M $LiPF_6$/EC (Ethylene carbonate): DEC (Diethyl carbonate) = 1:1 (v/v%) mixed solvent) was injected into the exterior body, and the exterior body was heat-sealed to encapsulate the electrode terminal with the electrode terminal end pulled out of the exterior body, to obtain an evaluation laminate cell.

Next, using the evaluation laminate cell, measurements were performed at room temperature in a potential range of 0 to 2.7 V, and the electrostatic capacity per unit weight C (F/g) was calculated based on the following formula 1. In the following formula 1, I (A) is a constant current, m (g) is the total mass of the two electrodes, and dV/dt (V/s) is a slope obtained by linear fitting of the discharge curve between Vmax (the voltage at the start of discharge) and 1/2Vmax.

[Mathematical Formula 1]

$$C = \frac{4 \times I}{m \times dV / dt}$$

(4) Measurement of electrostatic capacity per unit mass of the negative electrode

The negative electrode fabricated by the above-mentioned method was cut into a size of 3.0 cm × 3.0 cm to be used as an electrode for evaluation. In addition, a lithium metal having a size of 3.0 cm × 3.0 cm and a thickness of 100 $\mu$m was used as a counter electrode of this electrode for evaluation, and a microporous membrane made of polypropylene having a thickness of 50 $\mu$m was used as a separator to fabricate a half cell. At that time, lithium metal was used as a reference electrode. 1M LiPF$_6$/EC:DEC=1:1 (v/v%) was used as the electrolyte.

The charging current density was set to 50 mA/g, and lithium ions were charged at 500 mAh/g relative to the weight of the negative electrode active material, and then discharged at 50 mA/g to 3 V. The electrostatic capacity per unit weight of the negative electrode was calculated to be 14,000 F/g from the discharge time during which the potential of the negative electrode changed by 0.2 V from the potential of the negative electrode 1 minute after the start of discharge.

(5) Cell fabrication

The positive electrode was cut into 10 pieces measuring 2.8 cm × 2.8 cm, and the negative electrode was cut into 9 pieces measuring 3.0 cm × 3.0 cm, which were then laminated one by one with a separator between them and dried for 12 hours at 120°C. Thereafter, separators were placed on the top and bottom layers, the four sides were taped, and one piece of lithium metal pressed onto copper lath (copper mesh material) was placed on the outermost layer so as to face the positive electrode, to obtain an electrode laminate unit.

An aluminum positive electrode terminal was superimposed on the terminal welded part of the positive electrode current collector of the electrode laminate unit fabricated by the above-mentioned method and ultrasonically welded. In addition, a nickel negative electrode terminal was superimposed on the terminal welded part of the copper lath to which the negative electrode current collector and lithium metal foil were pressed, and ultrasonically welded. Then, the end of the electrode terminal was pulled out of the exterior laminate film pouch (9.8 mm × 9.8 mm × 2.9 mm) and three sides were heat-sealed, and 1M LiPF$_6$/EC:DEC = 1:1 (v/v%) was vacuum-impregnated as an electrolyte, and the remaining side was heat-sealed under reduced pressure to perform vacuum sealing, thereby assembling a film-type capacitor cell .

(6) Cell characteristic evaluation

The cell assembled by the above method was left for 14 days, and then the cell voltage was measured and found to be 2.7 V or higher, so it was determined that the lithium ions had been pre-dopped. Therefore, the cell was first charged at a constant current of 100 mA until the cell voltage reached 4.3 V, and then discharged at a constant current of 100 mA until the cell voltage reached 2.2 V. The initial electrostatic capacity was evaluated from this 4.3 V-2.2 V cycle.

[Durability]

The durability was evaluated on the following three-level scale by simulating the electrostatic capacity and electrostatic capacity retention rate after 2000 hours in a state where a cell voltage of 4.2 V was applied at a temperature of 65°C.

×: Capacity retention rate was less than 90%.
∘: Capacity retention rate was 90 to 95%.
◎: Capacity retention rate exceeded 95%.

The results are shown in Table 1 below.

[Table 1]

| Sample No. | CNT/graphene (mass ratio) | Carbon content (atomic %) | Oxygen content (atomic %) | C/O ratio | Evaluation results | | |
|---|---|---|---|---|---|---|---|
| | | | | | Energy density (Wh /kg) | Power density (W/kg) | Durability capacity retention rate (%) |
| 1 | 20/80 | 86.9 | 13.1 | 6.6 | 153 | 75 | 82 |
| 2 | 5/95 | 84.7 | 15.3 | 5.5 | 207 | 101 | 78 |
| 3 | 2/98 | 84.2 | 15.8 | 5.3 | 166 | 81 | 74 |
| 4 | 20/80 | 93.6 | 6.4 | 14.7 | 177 | 108 | 93 |

(continued)

| Sample No. | CNT/graphene (mass ratio) | Carbon content (atomic %) | Oxygen content (atomic %) | C/O ratio | Evaluation results | | |
|---|---|---|---|---|---|---|---|
| | | | | | Energy density (Wh /kg) | Power density (W/kg) | Durability capacity retention rate (%) |
| 5 | 5/95 | 92.6 | 7.4 | 12.6 | 215 | 132 | 92 |
| 6 | 2/98 | 92.4 | 7.6 | 12.2 | 193 | 117 | 71 |
| 7 | 20/80 | 96.1 | 3.9 | 24.8 | 197 | 161 | 97 |
| 8 | 5/95 | 95.6 | 4.4 | 21.6 | 230 | 187 | 96 |
| 9 | 2/98 | 95.5 | 4.5 | 21.1 | 216 | 175 | 96 |
| 10 | 20/80 | 97.9 | 2.1 | 46.2 | 207 | 169 | 98 |
| 11 | 5/95 | 97.7 | 2.3 | 41.9 | 233 | 189 | 98 |
| 12 | 2/98 | 97.6 | 2.4 | 41.2 | 220 | 179 | 98 |

As shown in Table 1 above, samples Nos. 1 to 3 using graphene/CNT composites with a ratio of a carbon atom to oxygen atom (C/O) of less than 7 were poor in energy density, power density, or durability. In contrast, samples Nos. 4 to 12 using graphene/CNT composites with a ratio of a carbon atom to oxygen atom (C/O) of 7 or more were high in energy density and power density, and also excellent in durability.

<Second Example>

As a second example of the present invention, electrodes were fabricated using graphene powders with different ratios of carbon atoms to oxygen atoms (C/O), and the characteristics of a lithium ion capacitor using this electrode as a positive electrode were evaluated in the same manner as in the first example described above. The evaluation results are shown in Table 2 below.

[Table 2]

| Sample No. | Carbon content (atomic %) | Oxygen content (atomic %) | C/O ratio | Evaluation results | | |
|---|---|---|---|---|---|---|
| | | | | Energy density (Wh/kg) | Power density (W/kg) | Durability capacity retention rate (%) |
| 21 | 83.9 | 16.1 | 5.2 | 123 | 89 | 40 |
| 22 | 89.5 | 10.5 | 8.5 | 127 | 77 | 75 |
| 23 | 92.3 | 7.7 | 12.0 | 129 | 75 | 91 |
| 24 | 95.4 | 4.6 | 20.9 | 134 | 109 | 95 |
| 25 | 96.0 | 4.0 | 24 | 134 | 109 | 96 |
| 26 | 67.7 | 32.3 | 2.1 | - | - | - |
| 27 | 77.2 | 22.8 | 3.4 | - | - | - |
| 28 | 87.6 | 12.4 | 7.1 | 127 | 74 | 70 |
| 29 | 99.2 | 0.8 | 124 | 130 | 106 | 98 |
| 30 | 97.6 | 2.4 | 41 | 133 | 108 | 97 |

As shown in Table 2 above, samples Nos. 21, 22, and 28, which used graphene powder with a ratio of a carbon atom to oxygen atom (C/O) of less than 12, had low power density and also poor durability. Samples Nos. 26 and 27, which used graphene oxide, could not be measured and were unsuitable as electrodes. In contrast, samples Nos. 23 to 25, 29, and 30, which used graphene powder with a ratio of a carbon atom to oxygen atom (C/O) of 12 or more, had high energy density and power density and were also excellent in durability.
From the above results, it was confirmed that the present invention can realize a lithium ion capacitor having high capacity and also excellent durability.

Reference Signs List

| | |
|---|---|
| 1 | Graphene |
| 2 | Carbon nanotube (CNT) |
| 10 | Graphene/CNT Composite |
| 20 | Aggregate |
| 21 | Polymer layer |
| 30 | Li-ion capacitor |
| 31 | Positive electrode (cathode) |
| 32 | Negative electrode (anode) |
| 33 | Spacer |
| 34 | Li-ion electrolyte |

**Claims**

1. An electrode material comprising a composite of graphene and carbon nanotubes, wherein the composite has a ratio of carbon atoms to oxygen atoms (C/O) as measured by X-ray photoelectron spectroscopy of 7 or more, and a carbon nanotube content of less than 20 mass% (excluding 0 mass%).

2. The electrode material according to claim 1, wherein the composite is a graphene laminate having carbon nanotubes between layers.

3. The electrode material according to claim 1 or 2, wherein the composite has a ratio of carbon atoms to oxygen atoms (C/O) of 12 or more as measured by X-ray photoelectron spectroscopy.

4. The electrode material according to any one of claims 1 to 3, wherein the composite forms an approximately spherical aggregate.

5. The electrode material according to claim 4, wherein a polymer layer is formed on the surface of the aggregate.

6. An electrode formed by using the electrode material according to any one of claims 1 to 5.

7. The electrode according to claim 6 further comprising a conductive material and a binder.

8. A capacitor comprising the electrode according to claim 6 or 7.

9. The capacitor according to claim 8, which is a lithium ion capacitor and uses the electrode as a positive electrode.

10. An electrode material comprising graphene powder having a ratio of carbon atoms to oxygen atoms (C/O) of 12 or more as measured by X-ray photoelectron spectroscopy.

[Figure 1]

[Figure 2]

[Figure 3]

[Figure 4]

### INTERNATIONAL SEARCH REPORT

International application No.

**PCT/JP2023/018663**

| A. | CLASSIFICATION OF SUBJECT MATTER |
|---|---|

*H01G 11/36*(2013.01)i; *H01G 11/06*(2013.01)i
FI:   H01G11/36; H01G11/06

According to International Patent Classification (IPC) or to both national classification and IPC

| B. | FIELDS SEARCHED |
|---|---|

Minimum documentation searched (classification system followed by classification symbols)

H01G11/36; H01G11/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2020-520100 A (NANOTEK INSTRUMENTS, INC.) 02 July 2020 (2020-07-02) paragraphs [0110]-[0111], [0133], fig. 6 | 10 |
| Y | | 1-10 |
| X | JP 2020-145144 A (SEKISUI CHEMICAL CO LTD) 10 September 2020 (2020-09-10) paragraph [0088] | 10 |
| Y | | 1-10 |
| X | JP 2018-523623 A (KEY TEAM ENTERPRISES LIMITED) 23 August 2018 (2018-08-23) paragraph [0054] | 10 |
| Y | | 1-10 |
| Y | WO 2019/065004 A1 (NATIONAL INSTITUTE FOR MATERIALS SCIENCE) 04 April 2019 (2019-04-04) paragraphs [0010]-[0106], fig. 1 | 1-10 |
| Y | JP 2001-325991 A (NISSHINBO IND INC) 22 November 2001 (2001-11-22) paragraphs [0003]-[0009], fig. 1 | 5-9 |

☑ Further documents are listed in the continuation of Box C.     ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 July 2023** | **25 July 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 **Japan** | |
| | Telephone No. |

Form PCT/ISA/210 (second sheet) (January 2015)

## INTERNATIONAL SEARCH REPORT

| International application No. |
|---|
| **PCT/JP2023/018663** |

**C.     DOCUMENTS CONSIDERED TO BE RELEVANT**

| Category* | Citation of document, with indication, where appropriate, of the relevant passages | Relevant to claim No. |
|---|---|---|
| A | JP 2020-161708 A (PANASONIC IP MAN CORP) 01 October 2020 (2020-10-01) paragraphs [0009]-[0071], fig. 1-3 | 1-10 |

Form PCT/ISA/210 (second sheet) (January 2015)

# EP 4 528 763 A1

| Patent document cited in search report | | | Publication date (day/month/year) | Patent family member(s) | | | Publication date (day/month/year) |
|---|---|---|---|---|---|---|---|
| JP | 2020-520100 | A | 02 July 2020 | US 2018/0330893 A1 paragraphs [0145]-[0146], [0174], fig. 6 | | | |
| | | | | WO 2018/208382 | A1 | | |
| | | | | CN 110612586 | A | | |
| | | | | KR 10-2020-0003867 | A | | |
| JP | 2020-145144 | A | 10 September 2020 | (Family: none) | | | |
| JP | 2018-523623 | A | 23 August 2018 | US 2018/0155201 A1 paragraph [0096] | | | |
| | | | | WO 2016/184355 | A1 | | |
| | | | | EP 3299337 | A1 | | |
| | | | | CN 107848805 | A | | |
| | | | | KR 10-2017-0141779 | A | | |
| WO | 2019/065004 | A1 | 04 April 2019 | US 2020/0220161 A1 paragraphs [0038]-[0165], fig. 1 | | | |
| | | | | EP 3690906 | A1 | | |
| | | | | CN 111164716 | A | | |
| JP | 2001-325991 | A | 22 November 2001 | US 2002/0042986 A1 paragraphs [0003]-[0022], fig. 1 | | | |
| | | | | EP 1156547 | A1 | | |
| | | | | CN 1324117 | A | | |
| | | | | KR 10-2001-0104682 | A | | |
| JP | 2020-161708 | A | 01 October 2020 | US 2022/0165512 A1 paragraphs [0014]-[0120], fig. 1-3 | | | |
| | | | | WO 2020/196313 | A1 | | |
| | | | | CN 113661552 | A | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015143162 A
- WO 2016056557 A
- JP 6732302 B